# EUROPÄISCHE PATENTSCHRIFT

(11) **EP 3 047 159 B1**
(45) Veröffentlichungstag und Bekanntmachung des Hinweises auf die Patenterteilung: **01.03.2017**
(21) Anmeldenummer: 15716447.6
(22) Anmeldetag: 26.03.2015
(51) Int. Cl.: F16B 7/18

(54) **PROFILVERBINDER SOWIE PROFILVERBUND**
PROFILE CONNECTOR AND PROFILE ASSEMBLY
RACCORD DE PROFILÉS ET ASSEMBLAGE DE PROFILÉS

(30) Priorität: 30.04.2014 DE 202014102037 U
(43) Veröffentlichungstag der Anmeldung: 27.07.2016
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2015/056525
(87) Internationale Veröffentlichungsnummer: WO 2015/165661

(56) Entgegenhaltungen:
- DE-U1-202005 013 097
- FR-A1- 2 717 870

## Beschreibung

Die Erfindung betrifft einen Profilverbinder gemäß Anspruch 1 zum Verbinden zweier Profilstäbe, insbesondere jeweils aus einer Leichtmetalllegierung, ganz besonders bevorzugt jeweils aufweisend mindestens eine hinterschnittene Längsnut. Die Profilstäbe selbst sind nicht Teil des Profilverbinders, sondern können mit diesem rechtwinklig zueinander aneinander fixiert werden. Der Profilverbinder umfasst einen vorzugsweise als Kaltfließpressteil, ganz besonders bevorzugt aus Stahl ausgebildeten Körper mit einer im montierten Zustand dem ersten Profilstab zugewandten, bevorzugt von einer Kammleiste gebildeten Seite, vorzugsweise einer Anlageseite zur Anlage an einem ersten Profilstab, insbesondere an einer Stirnseite eines ersten Profilstabes, wobei der Körper in einer hinterschnittenen Längsnut, insbesondere T-Nut, eines zweiten Profilstabes aufnehmbar ist. Der Körper weist mindestens einen Abstützschenkel zum Abstützen an einem Hinterschnitt der hinterschnittenen Längsnut des zweiten Profilstabes auf (um den zweiten Profilstab in Richtung des ersten Profilstabes kraftbeaufschlagen zu können). In den Körper ist eine sich senkrecht zu einer Längserstreckung des Körpers bzw. der zweiten Längsnut des zweiten Profilstabes erstreckende, vorzugsweise innengewindefreie Durchgangsöffnung vorgesehen, in welcher eine einen Schraubenkopf aufweisende Ankerschraube aufgenommen ist, mit welcher der Profilverbinder am ersten Profilstab, insbesondere stirnseitig, noch weiter bevorzugt in einer zentrischen Innengewindeöffnung festlegbar ist. Besonders bevorzugt ist der Schraubenkopf dabei vollständig in dem Körper versenkbar. Winklig, d.h. schräg zu einer Längsmittelachse der Durchgangsöffnung verläuft in dem Körper eine erste Innengewindeöffnung, in der eine erste, vorzugsweise als Madenschraube ausgebildete Spannschraube aufgenommen ist. Diese ist ausgebildet und angeordnet zum Verstellen des Körpers entlang der Ankerschraube weg von dem Schraubenkopf in Richtung des ersten Profilstabs durch Anziehen der Spannschraube in dem Innengewinde, d.h. durch Verschrauben der Spannschraube in Richtung der Ankerschraube und dabei Abstützen der Spannschraube an der Ankerschraube, die insoweit als Widerlager dient. Die Spannschraube wird dabei von außen durch die Nutöffnung der hinterschnittenen Längsnut des zweiten Profilstabes betätigt. Ferner betrifft die Erfindung einen Profilverbund gemäß Anspruch 14.

In der DE 41 27 284 C1 ist ein Profilverbinder zum Verbinden zweier Aluminiumprofilstäbe gezeigt. Der bekannte Profilverbinder umfasst einen Körper mit zwei Öffnungen, nämlich einer Durchgangsöffnung zur Aufnahme einer Ankerschraube zum Verankern des Profilverbinders in einem ersten Profilstab und eine schräg hierzu verlaufende Innengewindeöffnung, in der eine Madenschraube in Richtung der Ankerschraube verschraubbar ist, um den Körper und damit einen den Körper in einer hinterschnittenen Längsnut aufnehmenden zweiten Profilstab in Richtung des ersten Profilstabes kraftzubeaufschlagen und dadurch zu verstellen. Bei dem bekannten Profilverbinder wird diese Anpresskraft nicht flächig auf die hinterschnittene Längsnut des zweiten Profilverbinders aufgebracht, sondern entlang einer Anlagelinie, da der Körper durch Anziehen der Spannschraube relativ zu der Ankerschraube verkippt. Damit der zweite Profilstab auf den am ersten Profilstab festgelegten Körper aufgeschoben werden kann, darf die Ankerschraube des bekannten Profilverbinders nicht auf Block angezogen werden, da ansonsten der Hinterschnitt der hinterschnittenen Längsnut des zweiten Profilverbinders nicht zwischen dem Abstützschenkel des Körpers und der Stirnseite des ersten Profilstabes hindurchgeschoben werden kann. In der Praxis führt dies dazu, dass eine zu fest angezogene Ankerschraube vor dem Aufschieben des zweiten Profilstabes auf den Körper häufig noch gelöst werden muss. Dieses Problem führt auch dazu, dass es keinen definierten Anlage- bzw. Abstützbereich der ersten Spannschraube an der Ankerschraube gibt. Nachteilig ist zudem, dass trotz der kraftschlüssigen Verbindung zwischen erstem und zweitem Profilstab ein Relativverdrehen der Profilstäbe um die Längsmittelachse der Ankerschraube möglich bleibt bzw. ist.

Aus der EP 1 141 562 B1 ist ein alternativer Profilverbinder gezeigt, der neben einer Ankerschraube zwei Spannschrauben aufweist, die jedoch parallel zur Ankerschraube ausgerichtet sind und die sich nicht an der Ankerschraube sondern am Körper abstützen. Die Innengewindeöffnungen zur Aufnahme der Spannschrauben sind nicht an dem Körper, sondern in von dem Körper separaten Spannklötzen vorgesehen. Nachteilig bei dem bekannten Profilverbinder ist dessen Vielteiligkeit. Darüber hinaus besteht auch bei diesem bekannten Profilverbinder das Problem, dass die Ankerschraube nicht auf Block angezogen werden kann, um ein Aufschieben des zweiten Profilstabes zu ermöglichen.

Aus der DE 196 41 500 A1 ist ein Profilverbinder mit einer ebenen Abstützfläche bekannt. Auch hier ist eine definierte Vormontage nicht möglich.

Die FR 2 717 870 A1 beschreibt einen, zweiwinklig zueinander angeordnete Spannschrauben aufweisenden Profilverbinder, wobei sich die Spannschrauben an der Ankerschraube abstützen. Eine definierte Vormontage des Profilverbinders stirnseitig an einem Profilstab ist nicht möglich.

Ausgehend von dem vorgenannten Stand der Technik liegt der Erfindung die Aufgabe zugrunde, einen alternativen Profilverbinder zum miteinander Verbinden zweier Profilstäbe, insbesondere aus jeweils einer Leichtmetalllegierung anzugeben. Bevorzugt soll der Profilverbinder auf einfache Weise an einem ersten Profilstab, insbesondere stirnseitig vormontierbar sein. Zusätzlich oder alternativ soll der Profilverbinder so ausgebildet sein, dass im fixierten Zustand ein Relativverdrehen der aneinander fixierten Profilstäbe um die Längsmittelachse der Ankerschraube sicher vermieden wird. Zusätzlich oder alternativ soll der Profilverbinder bei minimierter Teilezahl eine großflächige Anlage an dem mindestens einen Hinterschnitt der hinterschnittenen Längsnut des zweiten Profilstabes und damit eine flächige Kraftbeaufschlagung des zweiten Profilstabes in Richtung des ersten Profilstabes ermöglichen. Zusätzlich oder alternativ soll der Profilverbinder so ausgebildet sein, dass die Kraftübertragung der mindestens einen Spannschraube auf die Ankerschraube optimiert ist und insbesondere eine definierte Spannsituation bzw. Anlagesituation an der Ankerschraube gewährleistet ist. Darüber hinaus besteht die Aufgabe darin, einen mit einem nach dem Konzept der Erfindung ausgebildeten Profilstab hergestellten bzw. herstellbaren Profilverbund anzugeben, der zusätzlich zu dem Profilverbinder zwei rechtwinklig zueinander angeordnete Profilstäbe, insbesondere aus einer Leichtmetalllegierung umfasst, wobei zumindest der zweite Profilstab mindestens eine hinterschnittene Längsnut aufweist. Bevorzugt weisen beide Profilstäbe mindestens eine, vorzugsweise mehrere hinterschnittene Längsnuten auf.

Diese Aufgabe wird mit einem Profilverbinder mit den Merkmalen des Anspruchs 1 und mit einem Profilverbund mit den Merkmalen des Anspruchs 14 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, an der im montierten Zustand des Profilverbinders dem ersten Profilstab zugewandten Seite des Körpers, bevorzugt an einer Anlageseite des Körpers zur stirnsseitigen Anlage an dem ersten Profilstab, eine Einformgeometrie vorzusehen, die so ausgebildet und angeordnet ist, dass sie sich durch Verstellen des Körpers in Richtung des ersten Profilverbinders, insbesondere in Richtung einer Stirnseite des ersten Profilverbinders (verursacht durch Anziehen der Spannschraube) in das Profilverbindermaterial des ersten Profilverbinders einformt, also eine formkongruente Vertiefung im ersten Profilstab zu erzeugen, um dadurch einen Formschluss zwischen dem Körper und dem ersten Profilstab herzustellen. Beim Einformen wird durch den von der Einformgeometrie auf das Material des ersten Profilstabes aufgebrachten Druck Material des ersten Profilstabes umgeformt, um somit eine die Einformgeometrie aufnehmende Vertiefung in der Stirnseite des ersten Profilstabes auszubilden. Dieser Formschluss verhindert mit einem nach dem Konzept der Erfindung ausgebildeten Profilverbinder hergestellten Profilverbund ein Verdrehen der Profilstäbe relativ zueinander um die Längsmittelachse der Ankerschraube. Darüber hinaus kann über die Einformgeometrie eine elektrisch leitende Verbindung zwischen dem Körper und dem ersten Profilstab hergestellt werden. Ganz besonders bevorzugt ist es, wenn bei einem mit einem erfindungsgemäßen Profilverbinder hergestellten Profilverbund der Profilverbinder aus einem härteren Material, insbesondere aus Stahl ausgebildet ist als der, vorzugsweise aus einer Leichtmetalllegierung, insbesondere einer Aluminiumlegierung hergestellte erste Profilstab. Ganz besonders bevorzugt verjüngt sich die Einformgeometrie in Richtung des ersten Profilstabes. Weiter bevorzugt weist die Einformgeometrie eine geringere Breitenerstreckung auf als eine vorzugsweise vorgesehene, die Einformgeometrie tragende Kammleiste des bevorzugt im Querschnitt T-förmigen Körpers oder als ein Außendurchmesser eines Ankerschraubenschaftes.

Wie später noch im Rahmen des erfindungsgemäßen Profilverbundes erläutert werden wird, ermöglicht es die Einformgeometrie erstmals, den Profilverbinder zum Herstellen eines Profilverbundes definiert vorzumontieren, wozu der Profilverbinder, insbesondere dessen Körper, so dimensioniert ist, dass die Ankerschraube soweit angezogen werden kann, bis der Körper des Profilverbinders mit seiner Einformgeometrie an der Stirnseite des ersten Profilstabes anliegt, d.h. sich dort (noch ohne in die Stirnseite des ersten Profilstabes eingeformt zu sein) abstützt und in diesem Zustand der Spalt bzw. der Abstand zwischen dem mindestens einen Abstützschenkel und der Stirnseite des ersten Profilverbinders größer ist, insbesondere um eine Spieldimension größer ist, als die in die gleiche Richtung gemessene Dicken- bzw. Höhenerstreckung des mindestens einen Hinterschnittes der hinterschnittenen Längsnut des zweiten Profilstabes, um insoweit in dem vormontierten Zustand des Profilverbinders mit angezogener Ankerschraube ein Aufschieben des zweiten Profilstabes auf dem vormontierten Profilverbinder genauer auf dessen Körper zu ermöglichen, woraufhin dann durch Anziehen der mindestens einen Spannschraube an der gewünschten Verschiebeposition der zweite Profilstab weiter in Richtung der ersten Stirnseite des ersten Profilstabes verstellt werden kann (mit der Einformgeometrie in das Material des ersten Profilstabes hinein), um die Profilstäbe aneinander (endgültig und drehfest) zu fixieren und gleichzeitig die Einformgeometrie des Körpers des ersten Profilverbinders in das Material des ersten Profilstabes einzuformen. Anders ausgedrückt ist in Weiterbildung der Erfindung vorgesehen, dass eine parallel zur Längserstreckung der Ankerschraube orientierte Gesamthöhenerstreckung des Körpers mit der Einformgeometrie so gewählt ist, dass der zweite Profilstab bei in der hinterschnittenen Längsnut des zweiten Profilstabes aufgenommenem Körper des Profilverbinders relativ zu dem Körper und dem ersten Profilstab entlang der Längserstreckung der hinterschnittenen Längsnut des zweiten Profilstabes verschiebbar ist. Im vormontierten Zustand wird ein Verdrehen des Körpers des ersten Profilstabes aufgrund der reibschlüssigen Anlage an der Stirnseite des ersten Profilstabes sicher verhindert.

Besonders zweckmäßig ist es, wie erwähnt, wenn die Einformgeometrie mindestens einen sich von dem Körper weg (hin in Richtung des ersten Profilstabes) verjüngenden Einformgeometrieabschnitt aufweist. Dieser ist zumindest abschnittsweise bevorzugt keilförmig gestaltet. Besonders zweckmäßig ist es, wenn die Einformgeometrie eine langgestreckte Form, insbesondere langgestreckte Keilform aufweist, wobei sich die langgestreckte Einformgeometrie in Richtung der Längserstreckung des Körpers, d.h. in Richtung der Längserstreckung der hinterschnittenen Längsnut des zweiten Profilstabes erstrecken kann oder aber auch senkrecht dazu. Die Einformgeometrie muss nicht zwingend keilförmig gestaltet sein. Bei entsprechend dünner Ausgestaltung bzw. geringer Breite muss sich die Geometrie nicht in Richtung des ersten Profilstab verjüngen, um einen Einformeffekt zu gewährleisten.

Besonders bevorzugt ist eine Ausführungsform, bei der die Einformgeometrie nicht nur einen einzigen Einformabschnitt aufweist, sondern mindestens oder ausschließlich zwei Einformabschnitte, die bevorzugt auf beiden über die Durchgangsöffnung für die Ankerschraube beabstandeten Längsseiten des Körpers verteilt angeordnet sind, um somit einen Formschluss auf zwei einander gegenüberliegenden Seiten der Ankerschraube zwischen dem Körper und dem ersten Profilstab zu ermöglichen.

Als besonders vorteilhaft hat es sich herausgestellt, wenn der Profilverbinder zumindest einenends einen Versenkabschnitt aufweist, der im montierten Zustand des Profilverbinders stirnseitig in eine hinterschnittene Längsnut des ersten Profilstabes hineinragen kann, um somit als zusätzliche Verdrehsicherung zu dienen. In Richtung der Längserstreckung des Profilverbinders befindet sich bevorzugt zwischen dem Versenkabschnitt und der Durchgangsöffnung zumindest ein Einformabschnitt der Einformgeometrie.

Als besonders vorteilhaft hat es sich herausgestellt, insbesondere für eine Ausführungsform des Profilverbinders, bei der der Ankerschraubenkopf zumindest abschnittsweise, vorzugsweise vollständig innerhalb des Körpers, bevorzugt in einem verbreiterten Durchgangsöffnungsendabschnitt versenkbar ist, wenn die erste Innengewindeöffnung (und vorzugsweise auch eine fakultative, später noch zu erläuternde zweite Innengewindeöffnung) die schräg zur Durchgangsöffnung, d.h. winklig zu dieser verläuft bzw. verlaufen, in die Durchgangsöffnung mündet, damit sich die in der Gewindeöffnung aufgenommene Spannschraube innerhalb des Körpers an der Ankerschraube abstützen kann. Auf diese Weise wird ein besonders robuster bauraumoptimierter Profilverbinder erhalten, der sich darüber hinaus vergleichsweise leicht montieren lässt.

In Weiterbildung der Erfindung ist mit Vorteil vorgesehen, dass der Profilverbinder nicht nur eine einzige winklig zur Durchgangsöffnung verlaufende Innengewindeöffnung, sondern zwei solcher Innengewindeöffnungen, so dass zusätzlich zu der ersten Spannschraube eine zweite Spannschraube schräg gegen die Ankerschraube, insbesondere den Ankerschraubenkopf verstellbar ist. Die Innengewindeöffnungen sind dabei so angeordnet, dass die darin angeordneten Spannschrauben durch die Nutöffnung der hinterschnittenen Längsnut des zweiten Profilstabes hindurch betätigbar bzw. anziehbar sind. Eine solche Ausführungsform hat den Vorteil, dass ein Verkippen des Körpers relativ zur Ankerschraube durch ein gleichmäßiges Verspannen der beiden Spannschrauben gegen die Ankerschraube vermieden werden kann, mit dem Effekt einer flächigen Anlage des Körpers des Profilverbinders insbesondere des mindestens einen Abstützschenkels, vorzugsweise von zwei Abstützschenkeln an dem mindestens einen, vorzugsweise an zwei parallelen Hinterschnitten der hinterschnittenen Längsnut des zweiten Profilstabes. Auf diese Weise kann ein bei dem aus der DE 41 27 284 C1 bekannten Profilverbinder auftretendes Verkippen sicher vermieden werden. Im Gegensatz zu dem aus der EP 1 141 562 B1 bekannten Profilverbinder kommt ein nach dem Konzept der Erfindung ausgebildeter Profilverbinder mit wesentlich weniger Bauteilen aus, ist einfacher aufgebaut und besonders robust durch Abstützen beider Spannschrauben an der Ankerschraube, vorzugsweise in einem Bereich innerhalb des Körpers.

Besonders zweckmäßig ist es, wenn die Innengewindeöffnungen auf zwei in Richtung der Längserstreckung des Körpers bzw. der hinterschnittenen Längsnut des zweiten Profilstabes einander gegenüberliegenden Seiten der Durchgangsöffnung angeordnet sind. Dabei ist es weiter bevorzugt, wenn die Längsmittelachsen der beiden Spannschrauben und die Längsmittelachse der Ankerschraube in einer gemeinsamen Ebene angeordnet sind.

Als besonders vorteilhaft hat es sich herausgestellt, wenn die Längsmittelachse der ersten Spannschraube und die Längsmittelachse der zweiten Spannschraube mit der Längsmittelachse der Ankerschraube betragsmäßig den gleichen Winkel, insbesondere von zumindest näherungsweise 45° einschließen.

In Weiterbildung der Erfindung ist mit Vorteil vorgesehen, dass die Ankerschraube des Profilverbinders eine (definierte) schräge Abstützfläche zur Anlage bzw. zum Abstützen der ersten (und falls vorgesehen einer zweiten) Spannschraube aufweist, wobei schräg in diesem Zusammenhang bedeutet, dass die Abstützfläche einen Winkel von ungleich 90° zur Längsmittelachse der Ankerschraube aufweist und einen Winkel von ungleich 90° zur einer Radialebene der Ankerschraube, die senkrecht zur Längsmittelachse der Ankerschraube verläuft. Bevorzugt ist die Abstützfläche unter einem Winkel zwischen 20° und 70°, vorzugsweise zwischen 30° und 60°, noch weiter bevorzugt zwischen 40° und 50°, ganz besonders bevorzugt von zumindest näherungsweise 45° zur Längsmittelachse der Ankerschraube angeordnet. Durch das Bereitstellen einer definierten schrägen Abstützfläche für die mindestens eine Spannschraube ist die Abstützsituation bzw. die Größe der erzeugten Axialkraftkomponente zum Versellen des Körpers entlang der Ankerschraube nicht wie im Stand der Technik beliebig, sondern definiert, was insbesondere für eine Ausführungsform von Vorteil ist, wonach die mindestens eine Innengewindeöffnung für die mindestens eine Spannschraube innerhalb des Körpers in die Durchgangsöffnung für die Ankerschraube mündet, so dass sich die Spannschraube innerhalb des Körpers an der Ankerschraube, insbesondere am Ankerschraubenkopf abstützen kann.

Als besonders vorteilhaft zur Realisierung einer solchen schrägen Abstützfläche hat sich herausgestellt, wenn der Schraubenkopf der Ankerschraube als vorzugsweise in dem Körper versenkbarer Senkkopf ausgebildet ist, wobei in diesem Fall bevorzugt die Abstützfläche von einer sich in Richtung vorderem Schraubenende verjüngenden Konusfläche des Senkkopfes gebildet ist.

Als besonders zweckmäßig hat es sich herausgestellt, wenn die Längsmittelachse der ersten Spannschraube und falls vorgesehen eine Längsmittelachse einer zweiten Spannschraube rechtwinklig verläuft bzw. verlaufen zu einer in der Abstützfläche verlaufenden (und sich darüber hinaus fortsetzenden), d.h. diese nicht nur berührenden oder schneidenden Achse, insbesondere einer sich unter einem Konuswinkel zur Längsmittelachse der Ankerschraube verlaufenden Mantellinie einer konusförmigen Abstützfläche. Noch weiter bevorzugt ist es dabei, wenn eine Stirnseite der ersten Spannschraube und falls vorgesehen auch eine Stirnseite der zweiten Spannschraube eben ausgebildet sind, d.h. in einer Radialebene zur jeweiligen Längsmittelachse der Spannschraube verlaufen, um somit eine möglichst große Anlagefläche zum Abstützen an der Abstützfläche der Ankerschraube bereitzustellen. Vorstehende Konfiguration bedeutet nicht zwingend, dass die erste und falls vorgesehen die zweite Spannschraube vollflächig mit ihrer Stirnseite an der Abstützfläche anliegen müssen, oder dass die Längsmittelachse der Spannschraube bzw. Spannschrauben die Abstützfläche treffen. Wesentlich ist zunächst, dass die Längsmittelachse bzw. Längsmittelachsen der Spannschraube bzw. Spannschrauben mit der in der Abstützfläche verlaufenden und sich über die Abstützfläche gedacht hinauserstreckenden Achse einen Winkel von 90° einschließt/einschließen, wobei der Schnittpunkt der Längsmittelachse bzw. Längsmittelachsen und der jeweiligen Achse der Abstützfläche auch außerhalb der Abstützfläche liegen kann, insbesondere dann, wenn sich die Spannschraube nur mit einem Randabschnitt der Stirnseite an der Abstützfläche abstützt.

Als besonders zweckmäßig hat es sich erwiesen, wenn die Längsmittelachse der ersten Spannschraube und/oder die Längsmittelachse einer fakultativen zweiten Spannschraube bzw. die Längsmittelachse der zugehörigen Innengewindeöffnungen mit der Längsmittelachse der Ankerschraube einen Winkel aus einem Winkelbereich zwischen 20° und 70°, vorzugsweise zwischen 30° und 60°, bevorzugt zwischen 40° und 50°, ganz besonders bevorzugt von (zumindest näherungsweise) 45° einschließt/einschließen. Bevorzugt verläuft eine ebene, der Abstützfläche zugrunde liegende Stirnseite der einen Spannschraube oder beider Spannschrauben parallel zu einer in der Abstützfläche verlaufenden Achse.

Als besonders vorteilhaft hat sich eine Ausführungsform des Profilverbinders erwiesen, bei der an dem mindestens einen Abstützschenkel auf einer dem Hinterschnitt der hinterschnittenen Längsnut des zweiten Profilstabes zugewandten Seite eine Schenkeleinformgeometrie, insbesondere (jedoch nicht zwingend) in einer Keilform vorgesehen ist, zum Einformen in den Hinterschnitt der hinterschnittenen Längsnut des zweiten Profilstabes und damit Herstellen eines Formschlusses durch Anziehen der mindestens einen Spannschraube. Auf diese Weise kann eine ggf. vorgesehene äußere elektrisch nicht-leitende Schicht des zweiten Profilstabes durchbrochen und somit eine elektrisch leitfähige Verbindung zwischen dem Körper und dem zweiten Profilstab hergestellt werden. Ganz besonders bevorzugt ist hierzu die erfindungsgemäß vorgesehene Einformgeometrie an der Anlageseite des Körpers zum Einformen in den ersten Profilstab vorgesehen, da auf diese Weise eine elektrisch leitende Verbindung zwischen den Profilstäben über den Körper herstellbar ist. Im Hinblick auf die konkrete Ausgestaltung der Schenkeleinformgeometrie gibt es unterschiedliche Möglichkeiten. Bevorzugt sind mehrere linienförmige Einformgeometrien, insbesondere Keilgeometrien, die sich in Richtung des Hinterschnittes der hinterschnittenen Längsnut des zweiten Profilstabes verjüngen vorgesehen, um somit ein leichtes Einformen durch Anziehen der Spannschrauben zu ermöglichen.

Besonders bevorzugt ist eine Ausführungsform des Körpers, bei der dieser zwei seitliche Abstützschenkel aufweist zur jeweiligen Anlage an einem von zwei parallelen Hinterschnitten der hinterschnittenen Längsnut, bevorzugt T-Nut, des zweiten Profilstabes, wobei die Abstützschenkel in Richtung des ersten Profilstabes überragt werden von einer die dem ersten Profilstab zugewandten Seite ausbildenden Kammleiste. Eine derartige Ausgestaltung führt zu einer im Querschnitt betrachtet T-förmigen Ausgestaltung des Körpers, wobei die Kammleiste in den Bereich zwischen den parallelen Hinterschnitten der hinterschnittenen Längsnuten in Richtung des ersten Profilstabes ragt und sich vorzugsweise zu beiden Seiten der Durchgangsöffnung fortsetzt. Bevorzugt bildet die Kammleiste eine Anlagefläche zum Abstützen an der Stirnseite des ersten Profilstabes, insbesondere bei in den ersten Profilstab eingeformter Einformgeometrie.

Ganz besonders bevorzugt ist die Einformgeometrie an einer vorerwähnten den mindestens einen Abstützschenkel in Richtung des ersten Profilstabes überragenden Kammleiste angeordnet und dem ersten Profilstab bei einem bestimmungsgemäßen Einbau zugewandt.

Ganz besonders zweckmäßig ist es, wenn die beiden Abstützschenkel der T-Form des Körpers auf einer von dem ersten Profilstab abgewandten bzw. dem Nutgrund der hinterschnittenen Längsnut des zweiten Profilstabes zugewandten (Unter-)Seite des Körpers abgeschrägt sind, insbesondere um sich soweit an eine zumindest näherungsweise formkongruente Nutausformung anzupassen.

In Weiterbildung der Erfindung ist mit Vorteil vorgesehen, dass der Körper zwei seitliche Abstützschenkel aufweist, zur jeweiligen Anlage an einem Hinterschnitt der hinterschnittenen Längsnut des zweiten Profilstabes und dass die Abstützschenkel überragt werden von einer die Anlagefläche zur Anlage an dem ersten Profilstab ausbildenden Kammleiste.

In Weiterbildung der Erfindung ist mit Vorteil vorgesehen, dass der Körper in einer Querschnittsansicht T-förmig ausgebildet ist, wobei die Abstützschenkel der T-Form bevorzugt abgeschrägt sind.

In Weiterbildung der Erfindung ist mit Vorteil vorgesehen, dass die Durchgangsöffnung sowie die erste und/oder eine zweite Innengewindeöffnung in einer die Abstützschenkel überragenden Kammleiste vorgesehen sind. Die Erfindung führt auch auf einen Profilverbund mit einem nach dem Konzept der Erfindung ausgebildeten Profilverbinder. Der Profilverbund umfasst neben dem Profilverbinder zwei rechtwinklig zueinander angeordnete Profilstäbe, insbesondere aus einer Leichtmetalllegierung, vorzugsweise aus einer Aluminiumlegierung, wobei der Profilverbinder mittels der Ankerschraube an dem ersten Profilstab festgelegt ist, insbesondere durch Verschrauben der Ankerschraube in eine zentrale Innengewindeöffnung des ersten Profilstabes, wobei das Innengewinde vorbereitet, d.h. vor dem Einschrauben der Ankerschraube vorgesehen sein kann oder alternativ die Ankerschraube als gewindeformende, insbesondere gewindeschneidene Schraube ausgebildet sein kann. Alternativ ist es möglich, die Ankerschraube mit ihrem Gewinde in einer Gewindehülse festzulegen, die in einer vorzugsweise vorgesehenen hinterschnittenen Längsnut des ersten Profilstabes festlegbar bzw. dann festgelegt ist. Der Körper des Profilverbinders ist bei einem fertig montierten Profilverbund in einer hinterschnittenen Längsnut des zweiten Profilstabes aufgenommen und stützt sich mit einem Abstützschenkel an einem Hinterschnitt der hinterschnittenen Längsnut ab, um den zweiten Profilstab in Richtung des ersten Profilstabes entlang der Längserstreckung der Ankerschraube kraftzubeaufschlagen, und zwar durch Anziehen, d.h. Festdrehen der ersten Spannschraube und vorzugsweise auch einer fakultativen zweiten Spannschraube innerhalb der zugehörigen Innengewindeöffnung gegen die Ankerschraube, vorzugsweise gegen eine schräge Abstützfläche der Ankerschraube.

Im montierten bzw. festgezogenen Zustand bildet der Körper des Profilverbinders bevorzugt über seine Einformgeometrie einen Formschluss mit dem ersten Profilstab aus, indem die Einformgeometrie des Profilverbinders, insbesondere stirnseitig, in das Material des ersten Profilstabes eingeformt ist. Hierdurch entsteht bevorzugt eine Verdrehsicherung, die ein Verdrehen der Profilstäbe um die Längsmittelachse der Ankerschraube sicher verhindert. Ganz besonders bevorzugt ist die Einformgeometrie eingeformt in eine Umfangswand bzw. einen Umfangswandabschnitt des ersten Profilstabes, der eine zentrische Innengewindeöffnung zur Aufnahme der Ankerschraube umschließt.

Um erstmals eine definierte Vormontierbarkeit des Profilverbinders zum Herstellen eines Profilverbundes zu gewährleisten, ist in Weiterbildung der Erfindung vorgesehen, dass der Profilverbinder, insbesondere der Körper so dimensioniert ist, dass die Ankerschraube soweit angezogen werden kann, bis der Körper des Profilverbinders mit seiner Einformgeometrie an der Stirnseite des ersten Profilstabes anliegt, d.h. sich dort abstützt und in diesem Zustand der Spalt bzw. Abstand zwischen dem mindestens einen Abstützschenkel und der Stirnseite des ersten Profilverbinders größer ist (insbesondere um eine Spieldimension größer ist) als die in die gleiche Richtung gemessene Dicken- bzw. Höhenerstreckung des mindestens einen Hinterschnittes der hinterschnittenen Längsnut (gemessen in Richtung der Tiefenerstreckung der Längsnut) des zweiten Profilstabes, um insoweit in dem vorbeschriebenen, vormontierten Zustand des Profilsverbinders mit angezogener Ankerschraube ein Aufschieben des zweiten Profilstabes auf den vormontierten Profilverbinder, genauer den Körper zu ermöglichen, woraufhin dann durch Anziehen der mindestens einen Spannschraube an der gewünschten Verschiebeposition der zweite Profilstab weiter in Richtung der Stirnseite des ersten Profilstabes verstellt werden kann (mit der Einformgeometrie in das Material des ersten Profilstabes hinein), um die Profilstäbe aneinander zu fixieren und gleichzeitig die Einformgeometrie des Körpers in das Material des ersten Profilstabes einzuformen. Anders ausgedrückt ist in Weiterbildung der Erfindung zur Herstellung einer Vormontierbarkeit des Profilverbinders vorgesehen, dass eine parallel zur Längserstreckung der Ankerschraube orientierte Gesamthöhenerstreckung des Körpers (vorzugsweise mit darin versenktem Ankerschraubenkopf) mit der Einformgeometrie so gewählt ist, dass der zweite Profilstab bei in der hinterschnittenen Längsnut des zweiten Profilstabes aufgenommenem Körper des Profilverbinders relativ zu dem Körper und dem ersten Profilstab entlang der Längserstreckung der hinterschnittenen Längsnut verschiebbar ist. Bevorzugt ist in diesem Zustand die Einformgeometrie gar nicht oder zumindest noch nicht vollständig in das Material des ersten Profilverbinders eingeformt.

Ganz besonders bevorzugt ist zur Gewährleistung einer guten Vormontierbarkeit des Profilverbinders am ersten Profilstab eine parallel zur Längserstreckung der Ankerschraube orientierte Gesamthöhenerstreckung des Körpers (mit darin aufgenommenem Ankerschraubenkopf) mit der Einformgeometrie größer, insbesondere um ein Montagespiel größer, als der parallel zur Ankerschraube der Längserstreckung gemessene Abstand zwischen einer äußeren Längsnutöffnung der hinterschnittenen Längsnut des zweiten Profilstabes und dem Längsnutgrund dieser Längsnut.

Besonders vorteilhaft in diesem Zusammenhang hat es sich erwiesen, wenn eine parallel zur Längserstreckung der Ankerschraube orientierte Gesamthöhenerstreckung eines den Abstützschenkel des Körpers in Richtung des ersten Profilstabes überragende (vorzugsweise mittig von der Durchgangsöffnung durchsetzte und/oder sich zu beiden Seiten der Durchgangsöffnung fortsetzende) Kammleiste des, vorzugsweise in einer Querschnittsansicht T-förmigen, Körpers und der Einformgeometrie größer ist als eine in dieselbe Richtung gemessene Höhenerstreckung des Hinterschnittes der hinterschnittenen Längsnut des zweiten Profilstabes.

Gemäß einer besonders bevorzugten Ausführungsform hat, wie eingangs erwähnt, der Profilverbinder einen Versenkabschnitt zum stirnseitigen Versenken in einer hinterschnittenen Längsnut des ersten Profilstabes. Ganz besonders bevorzugt sind zwei entlang der Längserstreckung des Profilverbinders beabstandete Versenkabschnitte vorgesehen. Bevorzugt ist der mindestens eine Versenkabschnitt bei einem fertig gestellten Profilverbund in einer hinterschnittenen Längsnut des ersten Profilstabes aufgenommen, wodurch eine zusätzliche Verdrehsicherung gegeben ist.

Für den Fall, dass der für den Profilverbund zur Anwendung kommende Profilverbinder eine schräge Abstützfläche, insbesondere eine Konusfläche, noch weiter bevorzugt am Ankerschraubenkopf aufweist, ist es im Hinblick auf eine vorteilhafte Ausgestaltung des Profilverbundes bevorzugt, wenn sich die erste Spannschraube und, falls vorgesehen, eine zweite Spannschraube mit ihrer, vorzugsweise ebenen Stirnfläche bzw. ihren ebenen Stirnflächen an der schrägen Abstützfläche der Ankerschraube abstützt/abstützen, ganz besonders bevorzugt innerhalb des Körpers des Profilverbinders, der noch weiter bevorzugt den Ankerschraubenkopf zumindest abschnittsweise, vorzugsweise vollständig in sich aufnimmt, insbesondere in einem verbreiterten Abschnitt der Durchgangsöffnung.

Insbesondere für eine Ausführungsform des Profilverbundes mit einem Profilverbinder, der zwei Spannschrauben aufweist, ist es von Vorteil, wenn beide Spannschrauben so angezogenen sind, dass sich der Körper des Profilverbundes in Richtung der Längserstreckung des Körpers betrachtet zu beiden Seiten (Längsseiten) der Ankerschraube an der Stirnseite des ersten Profilstabes abstützt bzw. dort anliegt. Ganz besonders bevorzugt ist zudem eine flächige, d.h. nicht linienförmige Anlage des mindestens einen Abstützschenkels des Körpers an den Hinterschnitt der hinterschnittenen Längsnut des zweiten Profilstabes gegeben.

Besonders bevorzugt ist eine Ausführungsform des Profilverbundes, bei der eine Längsmittelachse des Körpers bei angezogener erster und zweiter Spannschraube (bei Realisierung von zwei Spannschrauben) orthogonal zur Längsmittelachse des ersten Profilstabes angeordnet ist bzw. parallel verläuft zu einer Längserstreckung bzw. Längsachse der hinterschnittenen Längsnut des zweiten Profilstabes, in welcher der Körper aufgenommen ist.

In Weiterbildung der Erfindung ist mit Vorteil vorgesehen, dass die Einformgeometrie stirnseitig in eine zentrale die Ankerschraube aufnehmende Innengewindeöffnung umschließende Umfangswand des ersten Profilstabes formschlüssig eingeformt ist.

In Weiterbildung der Erfindung ist mit Vorteil vorgesehen, dass eine parallel zur Längserstreckung der Ankerschraube orientierte Gesamthöhenerstreckung des Körpers mit der Einformgeometrie so gewählt ist, dass der zweite Profilstab bei in der hinterschnittenen Längsnut aufgenommenem, und bevorzugt stirnseitig mit seiner Einformgeometrie an dem ersten Profilstab anliegenden, Körper des Profilverbinders relativ zu dem Körper und dem ersten Profilstab entlang der Längserstreckung der hinterschnittenen Längsnut verschiebbar ist.

In Weiterbildung der Erfindung ist mit Vorteil vorgesehen, dass eine parallel zur Längserstreckung der Ankerschraube orientierte Gesamthöhenerstreckung des Körpers mit der Einformgeometrie größer ist als der parallel zur Ankerschraubenlängserstreckung gemessene Abstand zwischen einer äußeren Längsnutöffnung der hinterschnittenen Längsnut des zweiten Profilstabes und dem Längsnutgrund dieser Längsnut.

In Weiterbildung der Erfindung ist mit Vorteil vorgesehen, dass eine parallel zur Längserstreckung der Ankerschraube orientierte Gesamthöhenerstreckung eines den Abstützschenkel in Richtung des ersten Profilstabes überragende Kammleiste des, vorzugsweise in einer Querschnittansicht T-förmigen, Körpers und der Einformgeometrie größer ist als eine in dieselbe Richtung gemessene Höhenerstreckung des Hinterschnittes der hinterschnittenen Längsnut des zweiten Profilstabes.

In Weiterbildung der Erfindung ist mit Vorteil vorgesehen, dass ein in Richtung der Längserstreckung des Körpers über die Einformgeometrie von der Durchgangsöffnung beabstandeter Versenkabschnitt bei gegen den ersten Profilstab verspanntem zweiten Profilstab stirnseitig in einer hinterschnittenen Längsnut des ersten Profilstabes aufgenommen ist.

In Weiterbildung der Erfindung ist mit Vorteil vorgesehen, dass sich die erste Spannschraube und/oder eine zweite Spannschraube an einer schrägen Abstützfläche der Ankerschraube, insbesondere an einer Konusfläche des Ankerschraubenkopfes abstützt/abstützen.

In Weiterbildung der Erfindung ist mit Vorteil vorgesehen, dass der Körper in Richtung der Längserstreckung des Körpers betrachtet zu beiden Seiten der Ankerschraube, insbesondere stirnseitig an dem ersten Profilstab anliegt.

In Weiterbildung der Erfindung ist mit Vorteil vorgesehen, dass eine Längsmittelachse des Körpers bei angezogener erster und zweiter Spannschraube orthogonal zur Längsmittelachse des ersten Profilstabes angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Längsschnittansicht durch die Darstellung eines Profilverbinders gemäß Fig. 2,
- Fig. 2:: eine Draufsicht auf den Profilverbinder gemäß Fig. 1,
- Fig. 3:: eine Ansicht auf ein nach dem Konzept der Erfindung ausgebildeten Profilverbinder in Richtung seiner Längserstreckung (klapprichtig zu der Darstellung gemäß Fig. 2),
- Fig. 4:: eine perspektivische Ansicht eines nach dem Konzept der Erfindung ausgebildeten Profilverbinders,
- Fig. 5 bis Fig. 8:: unterschiedliche, teilweise geschnittene Darstellungen eines mit einem nach dem Konzept der Erfindung ausgebildeten Profilverbinders hergestellten Profilverbundes nach dem Konzept der Erfindung, wobei ein später noch zu erläuternder zweiter Profilstab entgegen einer üblichen Anordnung zur besseren Darstellung der Erfindung nicht über seine gesamte Längserstreckung innerhalb der hinterschnittenen Längsnut des zweiten Profilstabes aufgenommen ist, was bevorzugt wäre bzw. ist.

In den Figuren sind gleiche Elemente und Elemente mit der gleichen Funktion mit den gleichen Bezugszeichen gekennzeichnet.

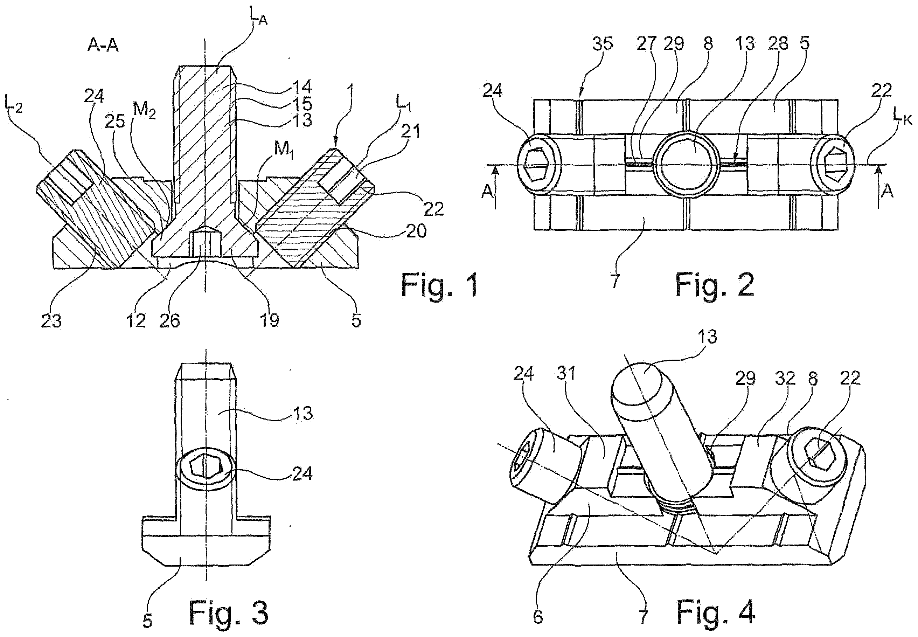

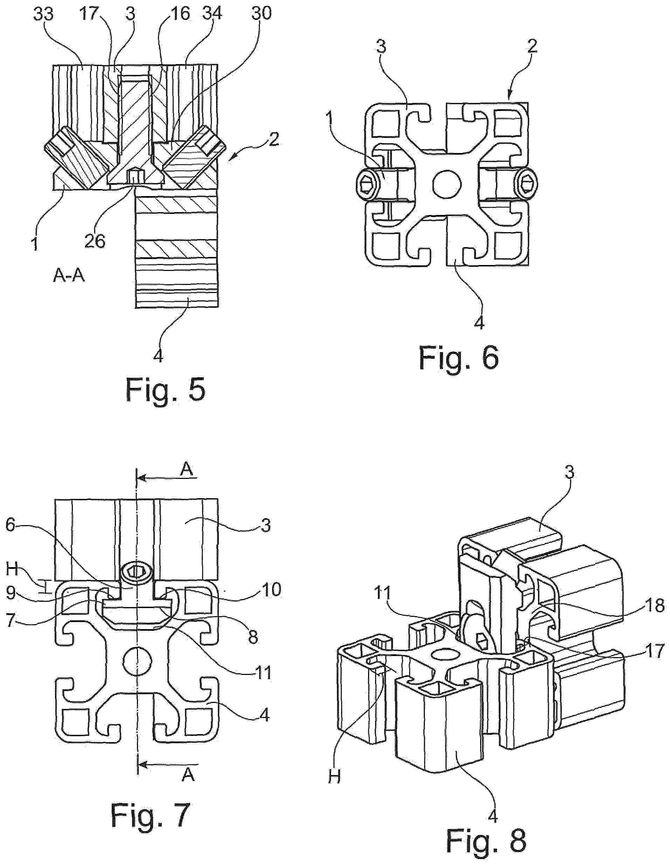

Der in den Fig. 1 bis 4 gezeigte Profilverbinder 1 dient, wie anhand der Fig. 5 bis 8 zu erkennen ist, zur Herstellung eines Profilverbundes 2 umfassend zusätzlich zu dem Profilverbinder 1 einen ersten Profilstab 3 sowie einen orthogonal hierzu orientierten zweiten Profilstab 4.

Anhand der Fig. 1 bis 4 ist zu erkennen, dass der Profilverbinder 1 einen als Kaltfließpressteil ausgebildeten Körper 5 aus Stahl umfasst, der in der in Fig. 3 gezeigten Querschnittsansicht eine T-Form aufweist. Der Körper 5 weist dabei eine (in Richtung erstem Profilstab) erhöhte Kammleiste 6 auf, die zwei seitliche Abstützschenkel 7, 8 überragt, die bei einem Profilverbund dazu dienen, sich an der Unterseite jeweils eines Hinterschnittes 9, 10 einer hinterschnittenen Längsnut 11 des zweiten Profilstabes 4 abzustützen und somit den zweiten Profilstab 4 in Richtung des ersten Profilstabes 3 anzuziehen bzw. mit einer Zugkraft zu beaufschlagen.

In den Körper 5, genauer in der die Abstützschenkel 7, 8 überragenden Kammleiste 6 ist eine, hier bevorzugt zentrische bzw. mittige Durchgangsöffnung 12 vorgesehen, in der eine als Senkkopfschraube ausgebildete Ankerschraube 13 aufgenommen ist, welche mit ihrem an ihrem Schaft 14 vorgesehenen Außengewinde 15 mit dem Innengewinde 16 einer zentrischen Innengewindeöffnung 17 (hier ein durchgehender Kanal) in der Stirnseite 18 des ersten Profilstabes 3 verschraubbar bzw. in einem Profilverbund verschraubt ist.

Die Durchgangsöffnung 12 ist gestuft ausgeführt, um somit ein Durchrutschen der einen Ankerschraubenkopf 19 aufweisenden Ankerschraube 13 zu vermeiden.

Ferner sind in der Kammleiste 6 zwei seitliche und schräg zur Längserstreckung der Ankerschraube 13 verlaufende bzw. sich erstreckende Innengewindeöffnungen zur Aufnahme jeweils einer Spannschraube vorgesehen. Konkret handelt es sich um eine erste Innengewindeöffnung 20 in der eine einen endseitigen Antrieb 21 aufweisende erste, als Madenschraube ausgebildete Spannschraube 22 aufgenommen ist.

Auf der über die Ankerschraube 13 beabstandeten Seite befindet sich eine zweite Innengewindeöffnung 23 mit einer zweiten, ebenfalls als Madenschraube ausgebildeten Spannschraube 24. Aus Fig. 1 ist zu erkennen, dass die Längsmittelachsen der ersten und zweiten Spannschraube L₁, L₂ unter einem Winkel von jeweils etwa 45° zu einer Längsmittelachse L_{A} der Ankerschraube 13 verlaufen. Sämtliche Längsmittelachsen L₁, L₂, L_{A} sind in einer gemeinsamen Ebene angeordnet, die auch eine in Fig. 2 gezeigte Längsmittelachse L_{K} des Körpers 5 aufnimmt.

Zum Verstellen des Körpers 5 mit samt des zweiten Profilstabes 4 von dem Ankerschraubenkopf 19 weg in Richtung des ersten Profilstabes 3 wird zumindest eine der Spannschrauben 22, 24, vorzugsweise werden beide Spannschrauben 22, 24 angezogen, d.h. weiter in den Körper 5 hineinverdreht, und zwar gegen eine, hier als Konusfläche ausgebildete Abstützfläche 25 der Ankerschraube13, welche in dem gezeigten Ausführungsbeispiel von dem als Senkkopf ausgebildeten Ankerschraubenkopf 19 gebildet wird. Zu erkennen ist, dass eine Mantellinie M₁ der Abstützfläche 25 orthogonal orientiert ist zur Längsmittelachse L₁ der ersten Spannschraube 22 und eine weitere Mantellinie M₂ senkrecht orientiert ist zur Längsmittelachse L₂ der zweiten Spannschraube 24. Die ebenen Stirnseiten der Spannschrauben 22, 24 verlaufen also parallel zu der jeweilig zugeordneten Mantellinie.

Die erste und zweite Innengewindeöffnung 20, 23 münden noch innerhalb des Körpers 5 in die gestuft ausgebildete Durchgangsöffnung 12, so dass sich die Spannschrauben 22, 24 innerhalb des Körpers 5 an der konischen Abstützfläche der Ankerschraube 13 abstützen können.

Aus Fig. 1 ist zu erkennen, dass die Ankerschraube 13 auf der von dem ersten Profilstab 3 abgewandten Seite einen Ankerschraubenantrieb 26 aufweist, der zur Vormontage des Profilverbinders 1 am ersten Profilstab 3 dient.

Hierzu wird die Ankerschraube 13 mittels des Antriebs 26 so weit angezogenen, bis eine in dem konkreten Ausführungsbeispiel zwei im Wesentlichen linienförmig und sich beispielsweise keilförmig in Richtung des ersten Profilstabes 3 verjüngende Einformgeometrieabschnitte 27, 28 aufweisende Einformgeometrie 29 an der Stirnseite 18 des ersten Profilstabes 3 abstützt, genauer an einer die zentrische Innengewindeöffnung 17 umgebenden Umfangswand 30.

Die Höhenerstreckung der Kammleiste 6, d.h. des die Abstützschenkel 7, 8 überragenden Körperabschnittes inklusive der Höhenerstreckung der Einformgeometrie 29 ist so bemessen, dass in diesem vormontierten Zustand der zweite Profilstab 4 über den Körper 5 in Richtung der Längserstreckung der hinterschnittenen Längsnut 11 aufschiebbar ist. Anders ausgedrückt ist die Höhenerstreckung der Kammleiste 6 inklusive der Einformgeometrie 29 (etwas) größer als die Höhenerstreckung H der Hinterschnitte der hinterschnittenen Längsnut 11, welche den Körper 5 aufnimmt.

Zum endgültigen Fixieren der beiden Profilstäbe 3, 4 aneinander werden die Spannschrauben 22, 24 weiter angezogen, so dass sich die Einformgeometrie 29 in das Material des ersten Profilstabes 3, genauer die Umfangswand 30 einformt, wodurch gleichzeitig eine Verdrehsicherung gegeben ist.

Aus den Figuren ist weiter zu erkennen, dass zusätzlich zu der Einformgeometrie 29 zwei über die Ankerschraube 13 beabstandete Versenkabschnitte 31, 32 vorgesehen sind, die Endabschnitte der Kammleiste 6 bilden und bei fixiertem Profilverbund in zugeordnete hinterschnittene Längsnuten 33, 34 des ersten Profilstabes auf zwei einander gegenüberliegenden Seiten der zentrischen Innengewindeöffnung 17 eingreifen und somit eine zusätzliche Verdrehsicherung bilden.

Wie eingangs erwähnt, ist auch eine Ausführungsform des Profilverbinders 1 mit nur einer Innengewindeöffnung 20 und/oder nur einer Spannschraube 22 realisierbar. Das Vorsehen der zwei Spannschrauben 22, 24 ermöglicht jedoch eine großflächige Anlage der Abstützschenkel 7, 8 an den Hinterschnitten 9, 10 der hinterschnittenen Längsnut 11.

Aus Fig. 2 und 3 ist zu entnehmen, dass an den Abstützschenkeln 7, 8 auf der den Hinterschnitten 9, 10 bzw. den Abstützflächen 25 der Hinterschnitte 9, 10 zugewandten Seite eine Schenkelabstützgeometrie 35, hier in Form mehreren keilförmiger Abschnitte vorgesehen ist, die sich beim Anziehen der Spannschrauben 22, 24 in das Material des zweiten Profilstabes 4 einformen und somit eine elektrisch leitende Verbindung zwischen dem Körper 5 und dem zweiten Profilstab 4 herstellen. Für den Fall, dass die Einformgeometrie 29 vorgesehen ist, was bevorzugt ist, kann über die Kombination mit der Schenkeleinformgeometrie 35 eine elektrisch leitende Verbindung zwischen den Profilstäben 3, 4 realisiert werden.

Wie aus Fig. 2 ersichtlich ist, erstrecken sich die langgestreckten Einformgeometrieabschnitte 27, 28 in Richtung der Längserstreckung des Körpers 5. Eine Anordnung senkrecht hierzu ist alternativ (oder zusätzlich) möglich.

### Bezugszeichen

- 1: Profilverbinder
- 2: Profilverbund
- 3: erster Profilstab
- 4: zweiter Profilstab
- 5: Körper
- 6: Kammleiste
- 7: Abstützschenkel
- 8: Abstützschenkel
- 9: Hinterschnitt
- 10: Hinterschnitt
- 11: hinterschnittene Längsnut des zweiten Profilstabes
- 12: Durchgangsöffnung
- 13: Ankerschraube
- 14: Schaft
- 15: Außengewinde
- 16: Innengewinde der Innengewindeöffnung im ersten Profilstab
- 17: Innengewindeöffnung (zentrale Öffnung) im ersten Profilstab
- 18: Stirnseite des ersten Profilstabes
- 19: Ankerschraubenkopf
- 20: erste Innengewindeöffnung im Körper
- 21: Antrieb
- 22: erste Spannschraube
- 23: zweite Innengewindeöffnung im Körper
- 24: zweite Spannschraube
- 25: schräge Abstützfläche
- 26: Ankerschraubenantrieb
- 27: Einformgeometrieabschnitt
- 28: Einformgeometrieabschnitt
- 29: Einformgeometrie
- 30: Umfangswand
- 31: Versenkabschnitt
- 32: Versenkabschnitt
- 33: hinterschnittene Längsnut des ersten Profilstabes
- 34: hinterschnittene Längsnut des zweiten Profilstabes
- 35: Schenkeleinformgeometrie

- L₁: Längsmittelachse der ersten Innengewindeöffnung bzw. der ersten Spannschraube
- L₂: Längsmittelachse der zweiten Innengewindeöffnung bzw. der zwei ten Spannschraube
- L_{A}: Längsmittelachse der Ankerschraube bzw. der Durchgangsöffnung
- L_{K}: Längsmittelachse des Körpers

- M₁: erste Mantellinie
- M₂: zweite Mantellinie

- H: Hinterschnitthöhe

## Patentansprüche

1. Profilverbinder zum Verbinden eines ersten und eines zweiten Profilstabes (3, 4), insbesondere aus einer Leichtmetalllegierung, mit einem in einer hinterschnittenen Längsnut (34) des zweiten Profilstabes (4) aufnehmbaren Körper (5) mit mindestens einem Abstützschenkel (7) zum Abstützen an einem Hinterschnitt (9, 10) der hinterschnittenen Längsnut (34) des zweiten Profilstabes (4) und einer, in einer in den Körper (5) eingebrachten, sich senkrecht zu einer Längserstreckung des Körpers (5) erstreckenden Durchgangsöffnung (12) aufgenommenen, einen Schraubenkopf aufweisenden Ankerschraube (13) zum Festlegen des Profilverbinders (1), insbesondere stirnseitig, an dem ersten Profilstab (3) und mit einer, in einer in dem Körper (5) vorgesehenen sich winklig zu einer Längsmittelachse (L_{A}) der Durchgangsöffnung (12) erstreckenden ersten Innengewindeöffnung (20) aufgenommenen ersten Spannschraube (22) zum Verstellen des Körpers (5) entlang der Ankerschraube (13) weg von dem Ankerschraubenkopf (19) in Richtung des ersten Profilstabes (3) durch Anziehen der ersten Spannschraube (22) in dem Innengewinde der ersten Innengewindeöffnung (20) und dabei Abstützen der ersten Spannschraube (22) an der Ankerschraube (13),
**dadurch gekennzeichnet,**
**dass** an den Körper (5) eine zum, insbesondere stirnseitgen, Einformen in den ersten Profilstab (3) durch Anziehen der ersten Spannschraube (22) zum Herstellen eines Formschlusses zwischen dem Körper (5) und dem ersten Profilstab (3) ausgebildete und angeordnete Einformgeometrie (29) angeformt ist.

2. Profilverbinder nach Anspruch 1,
**dadurch gekennzeichnet,**
**dass** die Einformgeometrie (29) eine sich in eine Richtung von dem Körper (5) weg verjüngende, insbesondere keilförmige, Form aufweist.

3. Profilverbinder nach einem der Ansprüche 1 oder 2,
**dadurch gekennzeichnet,**
**dass** die Einformgeometrie (29) langgestreckt ist und/oder sich parallel zur Längsersteckung des Körpers (5) oder senkrecht dazu erstreckt.

4. Profilverbinder nach einem der vorhergehenden Ansprüche,
**dadurch gekennzeichnet,**
**dass** die Einformgeometrie (29) zwei in Richtung der Längserstreckung des Körpers (5) über die Durchgangsöffnung (12) beabstandete Einformgeometrieabschnitte (27, 28) aufweist.

5. Profilverbinder nach einem der vorhergehenden Ansprüche,
**dadurch gekennzeichnet,**
**dass** in Richtung der Längserstreckung des Körpers (5) über die Einformgeometrie (29) ein Versenkabschnitt (31, 32) des Körpers (5) von der Durchgangsöffnung (12) beabstandet ist, der in einer Stirnseite einer hinterschnittenen Längsnut (33) des ersten Profilstabes (3) durch Anziehen der Spannschraube (22, 24) versenkbar ist.

6. Profilverbinder nach einem der vorhergehenden Ansprüche,
**dadurch gekennzeichnet,**
**dass** zusätzlich zu der ersten Spannschraube (22) eine in einer in dem Körper (5) vorgesehen, sich winklig zu der Längsmittelachse (L_{A}) der Durchgangsöffnung (12) erstreckenden zweiten Innengewindeöffnung (23) aufgenommene zweite Spannschraube (24) zum Verstellen des Körpers (5) entlang der Ankerschraube (13) weg von dem Schraubenkopf in Richtung des ersten Profilstabes (3) durch Anziehen der zweiten Spannschraube (24) in dem Innengewinde der zweiten Innengewindeöffnung (23) und dabei Abstützen der zweiten Spannschraube (24) an der Ankerschraube (13) vorgesehen ist,

7. Profilverbinder nach einem der vorhergehenden Ansprüche,
**dadurch gekennzeichnet,**
**dass** die Ankerschraube (13), insbesondere an ihrem Schraubenkopf, eine unter einem Winkel von ungleich 90° zur Längsmittelachse (L_{A}) der Ankerschraube (13) orientierte und unter einem Winkel von ungleich 90° zu einer senkrecht zur Längsmittelachse (L_{A}) der Ankerschraube (13) verlaufenden Radialebene orientierte schräge Abstützfläche (25) zur Anlage der ersten Spannschraube (22) aufweist.

8. Profilverbinder nach einem der vorhergehenden Ansprüche,
**dadurch gekennzeichnet,**
**dass** die erste Innengewindeöffnung (20) und/oder eine zweite Innengewindeöffnung (23) in die Durchgangsöffnung (12) mündet/münden.

9. Profilverbinder nach einem der vorhergehenden Ansprüche,
**dadurch gekennzeichnet,**
**dass** die Längsmittelachsen (L₁, L₂) der Spannschrauben (22, 24) und die Längsmittelachse (L_{A}) der Ankerschraube (13) in einer gemeinsamen Ebene angeordnet sind.

10. Profilverbinder nach einem der vorhergehenden Ansprüche,
**dadurch gekennzeichnet,**
**dass** die Längsmittellachse (L₁) der ersten Spannschraube (22) und die Längsmittelachse (L₂) der zweiten Spannschraube (24) mit der Längsmittelachse (L_{A}) der Ankerschraube (13) betragsmäßig den gleichen Winkel einschließen.

11. Profilverbinder nach einem der vorhergehenden Ansprüche,
**dadurch gekennzeichnet,**
**dass** der Ankerschraubenkopf (19) der Ankerschraube (13) als Senkkopf mit einer sich in Richtung vorderes Ankerschraubenende verjüngender Konusfläche als Abstützfläche (25) ausgebildet ist.

12. Profilverbinder nach einem der vorhergehenden Ansprüche,
**dadurch gekennzeichnet,**
**dass** die Längsmittelachse (L₁) der ersten Spannschraube (22) und/oder die Längsmittelachse (L₂) einer zweiten Spannschraube (24) orthogonal zu einer in der Abstützfläche (25) verlaufenden Achse, insbesondere einer sich unter einem Konuswinkel zur Längsmittelachse (L_{A}) der Ankerschraube (13) verlaufenden Mantellinie (M₁ bzw. M₂), angeordnet ist.

13. Profilverbinder nach einem der vorhergehenden Ansprüche,
**dadurch gekennzeichnet,**
**dass** an den Abstützschenkel (7, 8) eine Schenkeleinformgeometrie (35) zum Einformen in den Hinterschnitt (9, 10) der hinterschnittenen Längsnut (11) des zweiten Profilstabes (4) durch Anziehen der ersten und/oder einer zweiten Spannschraube (22, 24) angeformt ist.

14. Profilverbund (2) umfassend einen Profilverbinder (1) nach einem der vorhergehenden Ansprüche, sowie einen ersten Profilstab (3) und einen senkrecht zu dem ersten Profilstab (3) angeordneten, eine hinterschnittene Längsnut (34) aufweisenden zweiten Profilstab (4), wobei der Profilverbinder (1) mit seiner Ankerschraube (13), insbesondere stirnseitig, an dem ersten Profilstab (3), insbesondere in einer zentralen Innengewindeöffnung (17), festgelegt ist und der zweite Profilstab (4), insbesondere mit einer Längsseite, durch Anziehen der mindestens einen Spannschraube (22) gegen den ersten Profilstab (3) verspannbar und/oder verspannt ist.

15. Profilverbund nach Anspruch 14,
**dadurch gekennzeichnet,**
**dass** die Einformgeometrie (2) des Profilverbinders (1), insbesondere stirnseitig, in das Material, bevorzugt eine Leichtmetalllegierung, des ersten Profilstabes (3) eingeformt und dadurch der Körper (5) des Profilverbinders (1) formschlüssig, insbesondere verdrehsichernd, mit dem ersten Profilstab (3) verbunden ist.

## Claims

1. A profile connector for connecting a first and a second profile bar (3, 4), composed in particular of a light metal alloy, having a body (5) which can be received in an undercut longitudinal groove (34) of the second profile bar (4) and which has at least one support leg (7) for support against an undercut (9, 10) of the undercut longitudinal groove (34) of the second profile bar (4), and having an armature screw (13), which is received in a passage opening (12) formed into the body (5) and extending perpendicular to a longitudinal extension of the body (5) and which has a screw head for fixing the profile connector (1), in particular at a face side, to the first profile bar (3), and having a first clamping screw (22) which is received in a first internally threaded opening (20) provided in the body (5) and extending at an angle with respect to a longitudinal central axis (L_{A}) of the passage opening (12) for adjustment of the body (5) along the armature screw (13) away from the armature screw head (19) in the direction of the first profile bar (3) by tightening the first clamping screw (22) in the internal thread of the first internally threaded opening (20) and thereby supporting the first clamping screw (22) against the armature screw (13) **characterized in that** a moulding-in geometry (29) is formed on the body (5), which is designed and arranged to mould, in particular at a face side, into the first profile bar (3) by tightening the first clamping screw (22) in order to produce a positive locking between the body (5) and the first profile bar (3).

2. The profile connector according to claim 1, **characterized in that** the moulding-in geometry (29) has a shape which tapers in a direction away from the body (5), in particular wedge-shaped.

3. The profile connector according to one of claims 1 or 2, **characterized in that** the moulding-in geometry (29) is elongated and/or extends parallel to the longitudinal extension of the body (5) or perpendicular thereto.

4. The profile connector according to any one of the preceding claims, **characterized in that** the moulding-in geometry (29) has two moulding-in geometry sections (27, 28) which are spaced apart in the direction of the longitudinal extension of the body (5) via the passage opening (12).

5. The profile connector according to any one of the preceding claims, **characterized in that** in the direction of the longitudinal extension of the body (5) via the moulding-in geometry (29), a recess section (31, 32) of the body (5) is spaced apart from the passage opening (12), which can be recessed in a face side of an undercut longitudinal groove (33) of the first profile bar (3) by tightening the clamping screw (22, 24).

6. The profile connector according to any one of the preceding claims, **characterized in that** in addition to the first clamping screw (22), a second clamping screw (24) which is received in a second internally threaded opening (23) provided in the body (5) and extending at an angle to the longitudinal central axis (L_{A}) of the passage opening (12) is provided for adjustment of the body (5) along the armature screw (13) away from the screw head in the direction of the first profile bar (3) by tightening the second clamping screw (24) in the internal thread of the second internally threaded opening (23) and thereby supporting the first clamping screw (24) against the armature screw (13)

7. The profile connector according to any one of the preceding claims, **characterized in that** the armature screw (13), in particular on its screw head, has a sloping supporting surface (25) oriented at an angle not equal to 90° to the longitudinal central axis (L_{A}) of the armature screw (13) and oriented at an angle of not equal to 90° to a radial plane running perpendicular to the longitudinal central axis (L_{A}) of the armature screw (13) for abutment of the first clamping screw (22).

8. The profile connector according to any one of the preceding claims, **characterized in that** the first internally threaded opening (20) and/or a second internally threaded opening (23) open/opens into the passage opening (12).

9. The profile connector according to any one of the preceding claims, **characterized in that** the longitudinal central axes (L₁, L₂) of the clamping screws (22, 24) and the longitudinal central axis (L_{A}) of the armature screw (13) are arranged in a common plane.

10. The profile connector according to any one of the preceding claims, **characterized in that** the longitudinal central axis (L₁) of the first clamping screw (22) and the longitudinal central axis (L₂) of the second clamping screw (24) enclose an angle of the same magnitude with the longitudinal central axis (L_{A}) of the armature screw (13).

11. The profile connector according to any one of the preceding claims, **characterized in that** the armature screw head (19) of the armature screw (13) is configured as a countersunk head with a cone surface tapering in the direction of the front armature screw end as supporting surface (25).

12. The profile connector according to any one of the preceding claims, **characterized in that** the first longitudinal central axis (L₁) of the first clamping screw (22) and/or the longitudinal central axis (L₂) of a second clamping screw (24) is arranged orthogonally to an axis running in the supporting surface (25), in particular a surface line (M₁ or M₂) running at a cone angle to the longitudinal central axis (L_{A}) of the armature screw (13).

13. The profile connector according to any one of the preceding claims, **characterized in that** a leg moulding -in geometry (35) is formed on the supporting legs (7, 8) for moulding into the undercut (9, 10) of the undercut longitudinal groove (11) of the second profile rod (4) by tightening the first and/or a second clamping screw (22, 24).

14. Profile assembly (2) comprising a profile connector (1) according to any one of the preceding claims as well as a first profile bar (3) and a second profile bar (4) arranged perpendicular to the first profile bar (3) and having an undercut longitudinal groove (34), wherein the profile connector (1) with its armature screw (13), in particular on the face side, is fixed on the first profile bar (3), in particular in a central internally threaded opening (17) and the second profile bar (4), in particular with a longitudinal side, can be braced and/or is braced against the first profile bar (3) by tightening the at least one clamping screw (22).

15. The profile assembly according to claim 14, **characterized in that** the moulding-in geometry (2) of the profile connector (1), in particular at the face side, is moulded into the material, preferably a light metal alloy, of the first profile bar (3) and the body (5) of the profile connector (1) is thereby connected positively, in particular in a manner secured against twisting, to the first profile bar (3).

## Revendications

1. Raccord de profilés permettant de raccorder une première et une deuxième barres profilées (3, 4), en particulier en un alliage de métal léger, avec un corps (5) pouvant se loger dans une rainure longitudinale à contre-dépouille (34) de la deuxième barre profilée (4) et comportant au moins une branche d'appui (7) à appuyer sur une contre-dépouille (9, 10) de la rainure longitudinale à contre-dépouille (34) de la deuxième barre profilée (4) et une vis d'ancrage (13) présentant une tête de vis et logée dans une ouverture de passage (12) pratiquée dans le corps (5) et s'étendant perpendiculairement à une extension longitudinale du corps (5), pour fixer le raccord de profilés (1), en particulier du côté frontal, sur la première barre profilée (3), et une première vis de serrage (22) logée dans une première ouverture filetée intérieurement (20) prévue dans le corps (5) et s'étendant angulairement par rapport à un axe central longitudinal (L_{A}) de l'ouverture de passage (12) pour déplacer le corps (5) le long de la vis d'ancrage (13) à l'écart de la tête de la vis d'ancrage (19) en direction de la première barre profilée (3) par vissage de la première vis de serrage (22) dans le filet intérieur de la première ouverture filetée intérieurement (20) et appuyer ainsi la première vis de serrage (22) sur la vis d'ancrage (13),
**caractérisé en ce qu'**une géométrie de logement (29) est formée sur le corps (5), ladite géométrie de logement (29) étant configurée pour réaliser un assemblage par emboîtement entre le corps (5) et la première barre profilée (3) et disposée pour se former dans la première barre profilée (3) par vissage de la première vis de serrage (22), en particulier du côté frontal.

2. Raccord de profilés selon la revendication 1, **caractérisé en ce que** la géométrie de logement (29) présente une forme qui se rétrécit, en particulier en forme de coin, dans une direction partant du corps (5).

3. Raccord de profilés selon une des revendications 1 ou 2, **caractérisé en ce que** la géométrie de logement (29) est allongée et/ou s'étend parallèlement à l'extension longitudinale du corps (5) ou perpendiculairement à celle-ci.

4. Raccord de profilés selon l'une quelconque des revendications précédentes, **caractérisé en ce que** la géométrie de logement (29) présente deux parties de géométrie de logement (27, 28) espacées dans la direction de l'extension longitudinale du corps (5) au moyen de l'ouverture de passage (12).

5. Raccord de profilés selon l'une quelconque des revendications précédentes, **caractérisé en ce qu'**une partie fraisée (31, 32) du corps (5) est espacée de l'ouverture de passage (12) dans la direction de l'extension longitudinale du corps (5) par la géométrie de logement (29), laquelle peut être noyée dans un côté frontal de la rainure longitudinale à contre-dépouille (33) de la première barre profilée (3) par vissage de la vis de serrage (22, 24).

6. Raccord de profilés selon l'une quelconque des revendications précédentes, **caractérisé en ce qu'**il est prévu, en plus de la première vis de serrage (22), une deuxième vis de serrage (24) logée dans une deuxième ouverture filetée intérieurement (23) prévue dans le corps (5) et s'étendant angulairement par rapport à l'axe central longitudinal (L_{A}) de l'ouverture de passage (12) pour déplacer le corps (5) le long de la vis d'ancrage (13) à l'écart de la tête de vis en direction de la première barre profilée (3) par vissage de la deuxième vis de serrage (24) dans le filet intérieur de la deuxième ouverture filetée intérieurement (23) et appuyer ainsi la deuxième vis de serrage (24) sur la vis d'ancrage (13).

7. Raccord de profilés selon l'une quelconque des revendications précédentes, **caractérisé en ce que** la vis d'ancrage (13) présente, en particulier sur sa tête de vis, une surface d'appui oblique (25) orientée sous un angle différent de 90° par rapport à l'axe central longitudinal (L_{A}) de la vis d'ancrage (13) et orientée sous un angle différent de 90° par rapport à un plan radial s'étendant perpendiculairement à l'axe central longitudinal (L_{A}) de la vis d'ancrage (13), pour l'appui de la première vis de serrage (22).

8. Raccord de profilés selon l'une quelconque des revendications précédentes, **caractérisé en ce que** la première ouverture filetée intérieurement (20) et/ou une deuxième ouverture filetée intérieurement (23) débouche/débouchent dans l'ouverture de passage (12).

9. Raccord de profilés selon l'une quelconque des revendications précédentes, **caractérisé en ce que** les axes centraux longitudinaux (L₁, L₂) des vis de serrage (22, 24) et l'axe central longitudinal (L_{A}) de la vis d'ancrage (13) sont disposés dans un plan commun.

10. Raccord de profilés selon l'une quelconque des revendications précédentes, **caractérisé en ce que** l'axe central longitudinal (L₁) de la première vis de serrage (22) et l'axe central longitudinal (L₂) de la deuxième vis de serrage (24) forment avec l'axe central longitudinal (L_{A}) de la vis d'ancrage (13) un angle de même valeur.

11. Raccord de profilés selon l'une quelconque des revendications précédentes, **caractérisé en ce que** la tête de vis d'ancrage (19) de la vis d'ancrage (13) est réalisée sous forme de tête noyée avec une surface conique se rétrécissant en direction de l'extrémité avant de la vis d'ancrage comme surface d'appui (25).

12. Raccord de profilés selon l'une quelconque des revendications précédentes, **caractérisé en ce que** l'axe central longitudinal (L₁) de la première vis de serrage (22) et/ou l'axe central longitudinal (L₂) de la deuxième vis de serrage (24) est disposé orthogonalement par rapport un axe s'étendant dans la surface d'appui (25), en particulier par rapport à une génératrice (M₁ ou M₂) s'étendant sous un angle de cône par rapport à l'axe central longitudinal (L_{A}) de la vis d'ancrage (13).

13. Raccord de profilés selon l'une quelconque des revendications précédentes, **caractérisé en ce qu'**une géométrie de logement de branche (35) est formée sur les branches d'appui (7, 8) pour le logement dans la contre-dépouille (9, 10) de la rainure longitudinale à contre-dépouille (11) de la deuxième barre profilée (4) par vissage de la première et/ou de la deuxième vis de serrage (22, 24).

14. Assemblage de profilés (2) comprenant un raccord de profilés (1) selon l'une quelconque des revendications précédentes, ainsi qu'une première barre profilée (3) et une deuxième barre profilée (4) disposée perpendiculairement à la première barre profilée (3) et présentant une rainure longitudinale à contre-dépouille (34), dans lequel le raccord de profilés (1) est fixé avec sa vis d'ancrage (13), en particulier du côté frontal, sur la première barre profilée (3), en particulier dans une ouverture filetée intérieurement centrale (17), et la deuxième barre profilée (4) peut être et/ou est serrée contre la première barre profilée (3), en particulier avec un côté longitudinal, par vissage de ladite au moins une vis de serrage (22).

15. Assemblage de profilés selon la revendication 14, **caractérisé en ce que** la géométrie de logement (2) du raccord de profilés (1) est formée, en particulier du côté frontal, dans le matériau, de préférence un alliage de métal léger, de la première barre profilée (3) et le corps (5) du raccord de profilés (1) est ainsi assemblé par emboîtement, en particulier de façon calée en rotation, avec la première barre profilée (3).
